# EUROPÄISCHE PATENTSCHRIFT

(11) **EP 3 354 337 B1**
(45) Veröffentlichungstag und Bekanntmachung des Hinweises auf die Patenterteilung: **14.04.2021**
(21) Anmeldenummer: 17154045.3
(22) Anmeldetag: 31.01.2017
(51) Int. Cl.: B01J 23/86, B01J 25/02, B01J 35/00, B01J 35/02, B01J 35/10

(54) **VERFAHREN ZUM HERSTELLEN EINES METALLSCHAUMPELLETS, METALLSCHAUMPELLET, KATALYSATORFÜLLUNG UND STATISCHER MISCHER**
METHOD FOR PRODUCING A METAL FOAM PELLET, PELLET, CATALYST FILLING AND STATIC MIXER
PROCÉDÉ DE FABRICATION D'UN GRANULÉ DE MOUSSE METALLIQUE, GRANULÉ DE MOUSSE METALLIQUE, REMPLISSAGE DE CATALYSEUR ET MÉLANGEUR STATIQUE

(43) Veröffentlichungstag der Anmeldung: 01.08.2018
(73) Patentinhaber: Alantum Europe GmbH, 80336 München (DE)
(72) Erfinder: CHOI, Byoungkwon, Daijeon, 34023 (KR); KIM, Jongkwang, Seoul (KR); BAE, Jungsuk, Seoul (KR); TILLMANN, Andreas, 82008 Unterhaching (DE); TORKUHL, Lars, 80809 München (DE); BÉTON, Didier, 80686 München (DE); KOLVENBACH, Robin, 80639 München (DE)
(74) Vertreter: Manitz Finsterwald Patent- und Rechtsanwaltspartnerschaft mbB

(56) Entgegenhaltungen:
- US-A1- 2010 331 173
- US-A1- 2013 168 071
- SOOHO KIM ET AL: "A Review on Manufacturing and Application of Open-cell Metal Foam", PROCEDIA MATERIALS SCIENCE, Bd. 4, 1. Januar 2014 (2014-01-01), Seiten 305-309, XP055392260, ISSN: 2211-8128, DOI: 10.1016/j.mspro.2014.07.562
- YU X ET AL: "Intensification of biodiesel synthesis using metal foam reactors", FUEL, IPC SCIENCE AND TECHNOLOGY PRESS, GUILDFORD, GB, Bd. 89, Nr. 11, 1. November 2010 (2010-11-01), Seiten 3450-3456, XP027190026, ISSN: 0016-2361 [gefunden am 2010-06-19]

## Beschreibung

Die vorliegende Erfindung betrifft ein Verfahren zum Herstellen eines Pellets, ein Pellet sowie eine Katalysatorfüllung und einen statischen Mischer mit einer Vielzahl von Pellets.

Verfahren zum Herstellen von keramischen Pellets sind grundsätzlich bekannt. Beispielsweise wird zunächst ein Strang mittels Extrusion hergestellt, welcher anschließend zerschnitten wird, um einzelne Pellets zu erhalten. Derartige Pellets können als Katalysatoren eingesetzt werden. Auch sind monolithische Katalysatoren bekannt, die aus Keramiken, Metallschaum, Netzen oder sogenannten Honeycomb-Strukturen, d.h. wabenförmigen Strukturen, bestehen.

Metallschaum kann beispielsweise wie in der WO 2016/020053 A1 beschrieben hergestellt werden. Hierbei wird zunächst ein Polyurethanschaum mit einem Metall galvanisiert. Anschließend wird der Polyurethanschaum durch Pyrolyse entfernt, sodass ein Metallschaummaterial erhalten wird. Durch ein anschließendes Sintern lässt sich dieses Metallschaummaterial schließlich in einen Metallschaum überführen. Vor dem Sintern kann auch noch ein Metallpulver auf das Metallschaummaterial aufgetragen werden, welches dann beim Sintern mit dem Metallschaummaterial beispielsweise eine Legierung in Form eines Metallschaums bilden kann.

Eine Katalysatorfüllung hat einen entscheidenden Einfluss auf die Fluiddynamik in einem Reaktor und somit auf den Wärme- und Stofftransport sowie auf den Druckverlust. So führt beispielsweise ein dichteres Katalysatorbett zu einem erhöhten Druckverlust. Gleichzeitig kann in einem dichteren Katalysatorbett der Stofftransport besonders gut sein, da die dichtgepackte Katalysatorfüllung sehr viele Turbulenzen erzeugt, was mit einem verbesserten konvektiven Wärmetransport einhergeht.

Der Wärmetransport ist ein entscheidender Parameter, der sowohl für endotherme als auch für exotherme Reaktionen optimiert werden muss und die Wärmezu- und abfuhreigenschaft eines Reaktors maßgeblich beeinflusst. Je nach Temperaturbereich wird der Wärmetransport in einem chemischen Reaktor durch Leitung, Konvektion, oder Strahlung limitiert. Es besteht eine dahingehende Tendenz, dass mit zunehmender Temperatur der Beitrag des Wärmetransports durch Strahlung zunimmt. Beispiele für Verfahren, die durch den Wärmetransport durch Strahlung limitiert sind, sind Verfahren, die auf stark endothermen Reaktionen basieren, wie die Dampfreformierung. Bei diesen Verfahren besteht die Herausforderung darin, genug Wärmeenergie in den Reaktor einzubringen, um die chemischen Reaktionen anzutreiben. Typische Reaktionstemperaturen liegen bei über 900°C. Bei Temperaturen von unterhalb 800°C wird der Wärmetransport typischerweise durch die Konvektion limitiert. Die Konvektion ist stark von der Fluiddynamik abhängig und ist bei turbulenteren Strömungen begünstigt. Eine typische Kennzahl für die Turbulenzen in einem Reaktor ist die Reynolds-Zahl.

Um an chemischen Reaktionen in einem porösen Material teilzunehmen, ist es notwendig, dass ein Fluid zu katalytisch aktiven Zentren des porösen Materials gelangt. Der Stofftransport zu solchen katalytisch aktiven Zentren in porösen Materialien ist hauptsächlich dadurch bestimmt, wie groß der Anteil des Fluids ist, der in das poröse Material eindringt beziehungsweise wieviel dieses Fluids an dem porösen Material vorbeiströmt, ohne in die Poren einzudringen.

Einer der wichtigsten Parameter für die Kosten eines chemischen Verfahrens ist der Druckverlust. Je höher der Druckverlust ist, desto höher ist der notwendige Aufwand, um ein Fluid durch einen Reaktor zu fördern. Somit steigen mit zunehmendem Druckverlust eines Reaktors auch dessen Betriebskosten an. Allerdings ist ein gewisser Druckverlust unabdingbar, um erwünschte turbulente Strömungen in einem Reaktor zu erzeugen.

In US 20100331173 A1 ist ein wabenförmiger Katalysatorträger beschrieben, der aus drei Metalschichten aus Metalschaum besteht, die übereinander angeordnet sind.

Pellets aus offenporigem Metallschaum sind von Kim et al. in Procedia Materials Science 4 (2014) 305-309 beschrieben worden.

Es versteht sich, dass die obigen Überlegungen zur Fluiddynamik entsprechend auch für statische Mischer gelten, wie sie beispielsweise in Absorptions- oder Destillationskolonnen zum Einsatz kommen.

Der Erfindung liegt die Aufgabe zugrunde, ein Verfahren bereitzustellen, nach welchem sich Pellets herstellen lassen, mit welchen sich die Fluiddynamik in Reaktoren oder Kolonnen gezielt optimieren und einstellen lässt, sodass hierdurch der Wärme- und Stofftransport sowie der Druckverlust in einem Reaktor bzw. in einer Kolonne optimiert werden kann.

Zur Lösung der Aufgabe ist ein Verfahren mit den Merkmalen des Anspruchs 1 vorgesehen.

Das erfindungsgemäße Verfahren zum Herstellen eines Pellets, insbesondere für einen Katalysator und/oder statischen Mischer, umfasst ein Zuschneiden und/oder Verformen wenigstens einer Lage von Metallschaummaterial in eine Pelletform, wobei das Pellet ein Volumen von 0,8 mm³ bis 15 cm³ aufweist, und wobei die Porosität des Pellets größer gleich 70% ist.

Das erfindungsgemäße Verfahren erlaubt eine ökonomische und kontrollierte Herstellung von Pellets mit verschiedenen Formen. Die durch das Verfahren gegebene Gestaltungsfreiheit hinsichtlich der Geometrie und Größe der Pellets erlaubt unterschiedliche Packungen von Katalysatorbetten und/oder statischen Mischern mit adaptierter Fluiddynamik, sodass der Wärme- und Stofftransport sowie der Druckverlust in einem Reaktor optimiert werden kann.

Vorteilhafte Ausbildungen der Erfindung sind den Unteransprüchen, der Beschreibung und der Zeichnung zu entnehmen.

Gemäß einer Ausführungsform wird das Metallschaummaterial gesintert, beispielsweise um ein verschiedene Metalle aufweisendes Metallschaummaterial in einen Metalllegierungsschaum zu überführen. Das Sintern kann beispielsweise bei einer Temperatur von 500°C bis 1200°C in oxidativer oder reduktiver Atmosphäre erfolgen. Hierdurch lassen sich unterschiedliche Legierungen erhalten, die für den geplanten Einsatzzweck der Pellets optimierte Eigenschaften aufweisen können.

Durch das Sintern wird außerdem die Stabilität der Pellets erhöht, wodurch Pelletformen realisiert werden können, die bei Pellets aus keramischen Materialien nicht möglich sind. Die hohe Stabilität der Pellets erlaubt außerdem ein sehr schnelles und effizientes Packen des Katalysatorbetts, außerdem können höhere Packungsdichten erzielt werden. Entsprechendes gilt für aus einzelnen Pellets aufgebaute statische Mischer.

Gemäß einer Variante des Verfahrens wird die Formgebung zu Pellets durch das Zuschneiden und/oder Verformen vor dem Sintern vorgenommen. Alternativ ist es aber ebenso möglich, den Schritt des Zuschneidens bzw. Verformens erst nach dem Sintern vorzunehmen. Letztlich hängt die optimale Reihenfolge der Schritte von der angestrebten Pelletform ab.

Der Metallschaum ist bevorzugt ein offenporiger Metallschaum. Hierdurch ist es Fluiden möglich, wie beispielsweise gasförmigen Reaktanten, das gesamte Pellet zu durchdringen und innerhalb des Pellets an Reaktionen teilzunehmen. Gemäß einer bevorzugten Ausgestaltung umfasst der Metallschaum ein katalytisch aktives Material, welches heterogene Reaktionen katalysieren kann und insbesondere zur Umsetzung gasförmiger Reaktanten geeignet ist.

Bevorzugt umfasst der Metallschaum zumindest eines der Elemente Ni, Fe, Cr, Al, Nb, Ta, Ti, Mo, Co, B, Zr, Mn, Si, La, W, Cu, Ag, Au, Pd, Pt, Zn, Sn, Bi, Ce, und/oder Mg. Besonders bevorzugt umfasst der Metallschaum zumindest eines der Elemente Ni, Fe, Cr und/oder Al und ganz besonders bevorzugt zumindest eines der Elemente Ni und/oder Al. Mehrere dieser Elemente können zusammen als eine Legierung einen Bestandteil des Metallschaums bilden oder als Partikel auf dem Metallschaum vorliegen.

Der Metallschaum weist bevorzugt Poren mit Durchmessern auf, die monomodal oder multimodal, insbesondere bimodal, verteilt sind. Gemäß einer besonders bevorzugten Ausführungsform sind die Poren multimodal verteilt und innerhalb des Pellets räumlich so angeordnet, dass in einem ersten Bereich des Pellets Poren mit größeren Durchmessern vorhanden sind als in einem davon räumlich getrennten zweiten Bereich des Pellets. Poren mit unterschiedlichen Durchmessern können dazu verwendet werden, die Verweilzeit von Edukten und Produkten innerhalb eines Pellets zu beeinflussen. Auch kann durch Poren, welche sich hinsichtlich ihrer Größe, Art oder Geometrie unterscheiden, die Entstehung von Turbulenzen beeinflusst werden, wodurch sich der Wärme- und Stofftransport beeinflussen lässt.

Gemäß einer besonders bevorzugten Weiterbildung des erfindungsgemäßen Verfahrens werden wenigstens zwei Lagen unterschiedlichen Metallschaummaterials bereitgestellt. Als unterschiedlich werden unter anderem auch Lagen aus Metallschaummaterialien betrachtet, welche sich hinsichtlich der Orientierung der darin enthaltenen Poren unterscheiden, welche aus verschiedenen Materialien bestehen, welche sich hinsichtlich ihrer Dicken unterscheiden und/oder welche unterschiedliche Gasdurchlässigkeiten aufweisen. Insbesondere ist es bevorzugt, dass sich die wenigstens zwei unterschiedlichen Lagen hinsichtlich ihrer Porosität, ihrer Porendurchmesser, ihrer Materialzusammensetzungen und/oder ihrer Gasdurchlässigkeit unterscheiden. Durch den Einsatz unterschiedlicher Lagen lassen sich die fluiddynamischen Eigenschaften des Pellets gezielt einstellen, und somit der Wärme- und Stofftransport sowie der Druckverlust in einem Reaktor, der ein Katalysatorbett mit mehreren solcher Pellets aufweist, oder in einer Absorptions- oder Destillationskolonne mit einem statischen Mischer aus mehreren solcher Pellets beeinflussen.

Beispielsweise können die zwei Lagen von Metallschaummaterial durch Verpressen und/oder durch Verlöten mittels einer Lötfolie miteinander verbunden werden. Ein Verpressen erlaubt es, zwei Lagen zu verbinden, ohne dabei ein zusätzliches Material zu verwenden, welches möglicherweise bei einer Verwendung des resultierenden Pellets als Katalysatorfüllung und/oder statischer Mischer stören könnte. Der Einsatz einer Lötfolie gestattet es, gezielt eine Lötverbindung in die Pellets einzufügen, mit welcher sich beispielsweise die Fluiddynamik innerhalb des Pellets steuern lässt.

Beispielsweise erfolgt das Zuschneiden und/oder Verformen der wenigstens einen Lage des Metallschaummaterials mittels Laserschneiden, Wasserstrahlschneiden, Funkenerodieren, Zerspanen, insbesondere Sägen, Bohren, Drehen, oder Mahlen, kontrolliertem Brechen, Tordieren, Wickeln, Rollen, Pressen, Falten, Wärmebehandeln, insbesondere Schweißen mit einem Lichtbogen, Trennschweißen oder Behandeln mit einer Lötlampe, chemischem Behandeln, insbesondere Auslaugen oder Herauslösen.

Erfindungsgemäß weist das Pellet ein Volumen von 0,8 mm³ bis 15 cm³ und ganz besonders bevorzugt von 2 cm³ bis 10 cm³ auf. Bei einem Pellet mit einem Volumen von kleiner als 0,5 mm³ besteht die Gefahr, dass diese, insbesondere bei einem Einsatz als Katalysator für heterogene Reaktionen, vom Reaktantenstrom aus dem Reaktor getragen werden. Zudem erzeugt ein Pellet mit einem Volumen von kleiner als 0,5 mm³ nur wenige Turbulenzen in einem Reaktor und trägt somit wenig zum konvektiven Wärme- und Stofftransport bei. Katalysatorschüttungen mit Pellets, die ein Volumen von größer als 30 cm³ aufweisen, bilden hingegen Leerräume aus, welche für die konvektive

Wärmezu- und abfuhr nachteilig sind und insbesondere bei stark exothermen Reaktionen zu unerwünschten Hot Spots und einer Verringerung der Prozessstabilität beitragen. Andererseits können Leerräume bei Temperaturen von über 800°C die Wärmezu- und abfuhr durch Strahlung begünstigen. Entsprechend kann durch die gezielte Beeinflussung der Größe bzw. Anzahl der Leerräume die Wärmezu- und abfuhr für jegliche Prozessbedingungen optimiert werden.

Das Metallschaummaterial weist bevorzugt Poren auf, die Durchmesser von 10 µm bis 10000 µm, bevorzugt von 50 µm bis 3000 µm, ganz besonders bevorzugt von 100 µm bis 1500 µm aufweisen. Poren mit Durchmessern kleiner als 10 µm führen zu einer Verschlechterung der Stofftransporteigenschaften. Mit Metallschaummaterial, welches Porendurchmesser von 10 µm oder größer aufweist, lassen sich bessere Wärme- und Stofftransporteigenschaften erzielen. Jedoch ist bei Poren mit einem Durchmesser von größer als 10000 µm aufgrund eines verringerten Verhältnisses von einer durch den Metallschaum bereitgestellten katalytisch aktiven Oberfläche zu dem inneren Volumen der Poren die Effizienz eines Reaktors mit derartigen Pellets als Katalysatorfüllung verringert.

Die Porosität des Pellets ist größer gleich 70%, besonders bevorzugt größer gleich 80% und ganz besonders bevorzugt größer gleich 85%. Es handelt sich hierbei folglich um Pellets aus hochporösem Material. Die Porosität bezeichnet hierbei den Quotienten aus dem Volumen der Poren in einem Pellet zu dem Gesamtvolumen des Pellets. Es hat sich herausgestellt, dass sich eine Porosität von kleiner als 70% negativ auf den Stofftransport sowie auf den Druckverlust auswirkt, wenn ein solches Pellet in einem Katalysatorbett verwendet wird. Die Porosität wird hierbei mittels Bildanalyse anhand eines Querschliffs des Pellets bestimmt. Hierzu wird ein Querschliff des Pellets angefertigt und ein Bild davon aufgenommen. Zur Bestimmung der Porosität werden dann die Bildflächen mit und ohne Material, d.h. die Materialbereiche und die Lochbereiche, ins Verhältnis gesetzt. Eine Porosität von 50% bedeutet beispielsweise, dass in dem aufgenommenen Bild die Flächen mit und ohne Material gleich groß sind. Je höher der Anteil der Fläche ohne Material in dem aufgenommenen Bild ist, desto höher ist die Porosität des Pellets.

Es versteht sich, dass sich durch eine geeignete Ausbildung der Pellets auch ein daraus aufgebauter statischer Mischer an seine jeweilige Anwendung, beispielsweise in einer Absorptions- oder Destillationskolonne, optimal anpassen lässt.

Weiterer Gegenstand der Erfindung ist ein Pellet, das wenigstens eine Lage von Metallschaum umfasst und insbesondere nach einem der oben beschriebenen Verfahren erhältlich ist. Das Pellet kann beispielsweise für eine Katalysatorfüllung und/oder für einen statischen Mischer, zum Beispiel für eine Absorptions- oder Destillationskolonne, vorgesehen sein.

Der Metallschaum ist bevorzugt ein offenporiger Metallschaum. Hierdurch ist es gasförmigen Reaktanten möglich, das gesamte Pellet zu durchdringen und innerhalb des Pellets an Reaktionen teilzunehmen. Gemäß einer bevorzugten Ausgestaltung umfasst der Metallschaum ein katalytisch aktives Material, welches heterogene Reaktionen katalysieren kann und insbesondere zur Umsetzung gasförmiger Reaktanten geeignet ist.

Gemäß einer ersten Variante umfasst das Pellet wenigstens eine außenseitige Einbuchtung, eine außenseitige Rille und/oder wenigstens eine Wicklung und/oder Torsion einer Lage von Metallschaum. Durch diese Formgebung lassen sich die Fluiddynamik in für die jeweilige Anwendung geeigneter Weise beeinflussen und die Wärme- und Stofftransporteigenschaften eines Reaktors oder einer Kolonne optimieren.

Eine zweite Variante des Pellets sieht vor, dass wenigstens eine Außenfläche und/oder eine innere Grenzfläche des Pellets zumindest teilweise geschlossen ist.

Unter einer geschlossenen Außenfläche wird eine äußere Oberfläche eines Pellets verstanden, die keine Porenöffnungen aufweist, sodass gasförmige Reaktanten durch diese nicht in das Pellet eintreten oder aus dem Pellet entweichen können. Eine geschlossene innere Grenzfläche eines Pellets bezeichnet dementsprechend eine Fläche im Inneren des Pellets, die nicht von Poren durchdrungen ist. Eine solche innere Grenzfläche kann beispielsweise zwischen zwei Lagen von Metallschaum existieren, die unter Verwendung einer Lötfolie miteinander verbunden sind. Solche teilweise geschlossenen Außenflächen und/oder inneren Grenzflächen können zu Turbulenzen in einem den Reaktor oder die Kolonne durchströmenden Gasstrom beitragen und die Fluiddynamik beeinflussen, wodurch letztlich die Wärme- und Stofftransporteigenschaften eines Reaktors bzw. einer Kolonne optimiert werden können.

Gemäß einer dritten Variante umfasst das Pellet wenigstens zwei unterschiedliche Lagen von Metallschaum. Mit unterschiedlichen Lagen von Metallschaum lassen sich verschiedene Eigenschaften in einem Pellet vereinen, wodurch wiederrum die Fluiddynamik gesteuert und somit die Wärme- und Stofftransporteigenschaften sowie der Druckverlust eines Reaktors oder einer Kolonne optimiert werden können.

Die erste, zweite und dritte Variante schließen sich nicht gegenseitig aus, sondern können auch in Kombination vorliegen, so dass bei einer Variante das Pellet wenigstens eine außenseitige Einbuchtung, eine außenseitige Rille und/oder wenigstens eine Wicklung und/oder Torsion einer Lage von Metallschaum umfasst und wenigstens eine Außenfläche und/oder eine innere Grenzfläche des Pellets zumindest teilweise geschlossen ist. Gemäß einer weiteren Variante umfasst das Pellet wenigstens eine außenseitige Einbuchtung, eine außenseitige Rille und/oder wenigstens eine Wicklung und/oder Torsion einer Lage von Metallschaum und wenigstens zwei unterschiedliche Lagen von Metallschaum, wobei wenigstens eine Außenfläche und/oder innere Grenzfläche des Pellets zumindest teilweise geschlossen ist. Gemäß einer weiteren Alternative ist vorgesehen, dass das Pellet wenigstens eine außenseitige Einbuchtung, eine außenseitige Rille und/oder wenigstens eine Wicklung und/oder Torsion einer Lage von Metallschaum und wenigstens zwei unterschiedliche Lagen von Metallschaum umfasst. Schließlich kann das Pellet wenigstens zwei unterschiedliche Lagen von Metallschaum umfassen und wenigstens eine Außenfläche und/oder eine innere Grenzfläche des Pellets zumindest teilweise geschlossen sein.

Bevorzugt umfasst das Pellet einen Metallschaum, der zumindest eines der Elemente Ni, Fe, Cr, Al, Nb, Ta, Ti, Mo, Co, B, Zr, Mn, Si, La, W, Cu, Ag, Au, Pd, Pt, Zn, Sn, Bi, Ce, und/oder Mg . Besonders bevorzugt umfasst der Metallschaum zumindest eines der Elemente Ni, Fe, Cr und/oder Al und ganz besonders bevorzugt zumindest eines der Elemente Ni und/oder Al. Mehrere dieser Elemente können eine Legierung bilden und einen Bestandteil des Metallschaums oder den gesamten Metallschaum ausmachen. Außerdem können diese Elemente in Partikeln enthalten sein, die innerhalb des Metallschaums vorliegen. Besonders Bevorzugt umfasst der Metallschaum eine Nickel-Eisen-Chrom-Aluminium-Legierung und/oder eine Nickel-Chrom-Aluminium Legierung. Zur Einstellung und Optimierung der katalytischen Aktivität kann die Nickel-Eisen-Chrom-Aluminium-Legierung und/oder die Nickel-Chrom-Aluminium-Legierung mit weiteren Elementen dotiert sein.

Ganz besonders bevorzugt besteht der Metallschaum zumindest im Wesentlichen aus einer Nickel-Eisen-Chrom-Aluminium-Legierung und/oder einer Nickel-Chrom-Aluminium-Legierung. Dies bedeutet, dass der Metallschaum abgesehen von einer möglicherweise dotierten Nickel-Eisen-Chrom-Aluminium-Legierung und/oder einer Nickel-Chrom-Aluminium-Legierung lediglich unvermeidbare Verunreinigungen und/oder Rückstände einer bei der Herstellung möglicherweise verwendeten Lötfolie enthält.

Gemäß einer Ausführungsform weist der Metallschaum Poren mit Durchmessern auf, die monomodal oder multimodal, insbesondere bimodal, verteilt sind.

Bevorzugt weisen die Poren in dem Pellet Durchmesser von 10 µm bis 10000 µm, bevorzugt von 50 µm bis 3000 µm, ganz besonders bevorzugt von 100 µm bis 1500 µm auf. Poren mit Durchmessern kleiner als 10 µm können zu einem erhöhten Druckverlust führen sowie den Wärme- und Stofftransport behindern. Mit Pellets, die Porendurchmesser über 100 um aufweisen lassen sich deutlich bessere Wärme- und Stofftransporteigenschaften sowie ein verringerter Druckverlust erzielen. Jedoch ist bei Poren mit einem Durchmesser von größer als 10000 µm aufgrund eines verringerten Verhältnisses von einer durch den Metallschaum bereitgestellten katalytisch aktiven Oberfläche zu dem inneren Volumen der Poren die Effizienz eines Reaktors mit derartigen Pellets als Katalysatorfüllung verringert.

Zudem betrifft die vorliegende Erfindung eine Katalysatorfüllung mit einer Vielzahl von Pellets nach zumindest einem der oben beschriebenen Aspekte.

Die erfindungsgemäße Katalysatorfüllung kann beispielsweise bei einer heterogenkatalysierten Reaktion zur Anwendung kommen. Dabei können die Reaktanten und Produkte der heterogenkatalysierten Reaktion in gasförmiger und/oder flüssiger Form vorliegen. Des Weiteren kann die erfindungsgemäße Katalysatorfüllung bei der Umsetzung von Erdgas in längerkettige Kohlenwasserstoffe, bei der Hydrierung/Dehydrierung von Kohlenwasserstoffen, insbesondere bei der Dampfreformierung, bei Oxidationsreaktionen, insbesondere bei der partiellen Ethylenoxidation Verwendung finden.

Noch ein weiterer Gegenstand der Erfindung ist ein statischer Mischer, beispielsweise für eine Absorptions- oder Destillationskolonne, mit einer Vielzahl von Pellets der oben beschriebenen Art.

Gemäß einer Ausführungsform umfasst die Vielzahl von Pellets der Katalysatorfüllung oder des statischen Mischers unterschiedliche Pellets, insbesondere Pellets, die sich hinsichtlich ihrer Größe, Form, Oberfläche, Dichte, Porosität und/oder ihres Materials unterscheiden. Hierdurch ist es möglich, die Fluiddynamik und somit den Wärme- und Stofftransport in geeigneter Weise zu beeinflussen und somit die Wärmezu- und abfuhreigenschaften des Reaktors zu optimieren.

Gemäß einer weiteren Ausführungsform sind die unterschiedlichen Pellets in der Katalysatorfüllung oder in dem statischen Mischer gleichmäßig verteilt. Gemäß einer anderen Ausführungsform weist die Verteilung der unterschiedlichen Pellets einen Gradienten in axialer Richtung und/oder einen Gradienten in radialer Richtung auf. Die axiale Richtung bezeichnet die Richtung von einem Reaktor- bzw. Kolonneneingang zu einem Reaktor- bzw. Kolonnenausgang und die radiale Richtung bezeichnet die Richtung quer zur axialen Richtung. Gemäß einer noch weiteren Ausführungsform weist die Verteilung der unterschiedlichen Pellets in axialer Richtung und/oder in radialer Richtung diskrete Schichten auf. Eine Variation der Zusammensetzung der Katalysatorfüllung oder des statischen Mischers in der radialen Richtung erlaubt es, die Wärmezu- und abfuhreigenschaften bis ins Innere des Reaktors oder der Kolonne gezielt zu beeinflussen und somit den Reaktor oder die Kolonne entsprechend zu optimieren. Eine Veränderung der Zusammensetzung der Katalysatorfüllung oder des statischen Mischers in axialer Richtung ermöglicht eine Anpassung der Fluiddynamik an eine sich in axialer Richtung verändernde Zusammensetzung des Reaktantenstromes.

Nachfolgend wird die Erfindung rein beispielhaft anhand von möglichen Ausführungsformen unter Bezugnahme auf die beigefügte Zeichnung beschrieben. Es zeigen:
- Fig. 1: eine schematische Darstellung eines erfindungsgemäßen Verfahrens,
- Fig. 2: eine Ausführungsform eines erfindungsgemäßen Pellets,
- Fig. 3: eine weitere Ausführungsform eines erfindungsgemäßen Pellets,
- Fig. 4: eine weitere Ausführungsform eines erfindungsgemäßen Pellets,
- Fig. 5: eine weitere Ausführungsform eines erfindungsgemäßen Pellets,
- Fig. 6: eine weitere Ausführungsform eines erfindungsgemäßen Pellets,
- Fig. 7: eine weitere Ausführungsform eines erfindungsgemäßen Pellets und ein verformtes Metallschaummaterial,
- Fig. 8: eine weitere Ausführungsform eines erfindungsgemäßen Pellets,
- Fig. 9: eine weitere Ausführungsform eines erfindungsgemäßen Pellets,
- Fig. 10: eine weitere Ausführungsform eines erfindungsgemäßen Pellets,
- Fig. 11: eine weitere Ausführungsform eines erfindungsgemäßen Pellets,
- Fig. 12: eine weitere Ausführungsform eines erfindungsgemäßen Pellets,
- Fig. 13: eine weitere Ausführungsform eines erfindungsgemäßen Pellets,
- Fig. 14: eine weitere Ausführungsform eines erfindungsgemäßen Pellets,
- Fig. 15: eine weitere Ausführungsform eines erfindungsgemäßen Pellets,
- Fig. 16a: eine Querschnittsansicht einer Ausführungsform eines erfindungsgemäßen Pellets mit drei unterschiedlichen Lagen,
- Fig. 16b: eine Querschnittsansicht einer weiteren Ausführungsform eines erfindungsgemäßen Pellets mit drei unterschiedlichen Lagen,
- Fig. 16c: eine Querschnittsansicht einer weiteren Ausführungsform eines erfindungsgemäßen Pellets mit zwei unterschiedlichen Lagen,
- Fig. 17a: eine schematische Darstellung einer Ausführungsform eines erfindungsgemäßen Pellets,
- Fig. 17b: eine schematische Darstellung einer weiteren Ausführungsform eines erfindungsgemäßen Pellets,
- Fig. 18: einen Reaktor mit einer Katalysatorfüllung,
- Fig. 19: eine Querschnittsansicht eines Reaktors,
- Fig. 20: eine teiltransparente Ansicht eines Reaktors mit einer Katalysatorfüllung,
- Fig. 21a: Druckverluste bei vorgegebenen Stoffmengenströmen für Pellets der Beispiele 1 bis 5 und der Vergleichsbeispiele 1 und 2,
- Fig. 21b: Druckverluste in Abhängigkeit vom Massen- und Stofftransport für Pellets der Beispiele 1 bis 5 und der Vergleichsbeispiele 1 und 2,
- Fig. 22a: drei Auslasstemperaturprofile für drei mit Pellets gepackte Reaktoren und
- Fig. 22b: mittlere Wärmetransportkoeffizienten der Reaktoren von Fig. 21a.

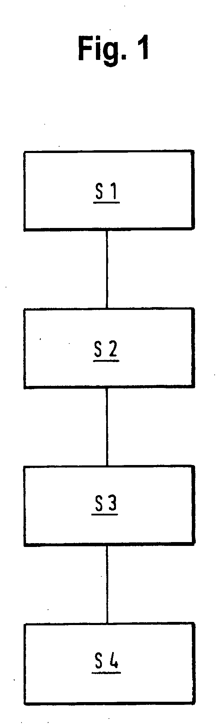

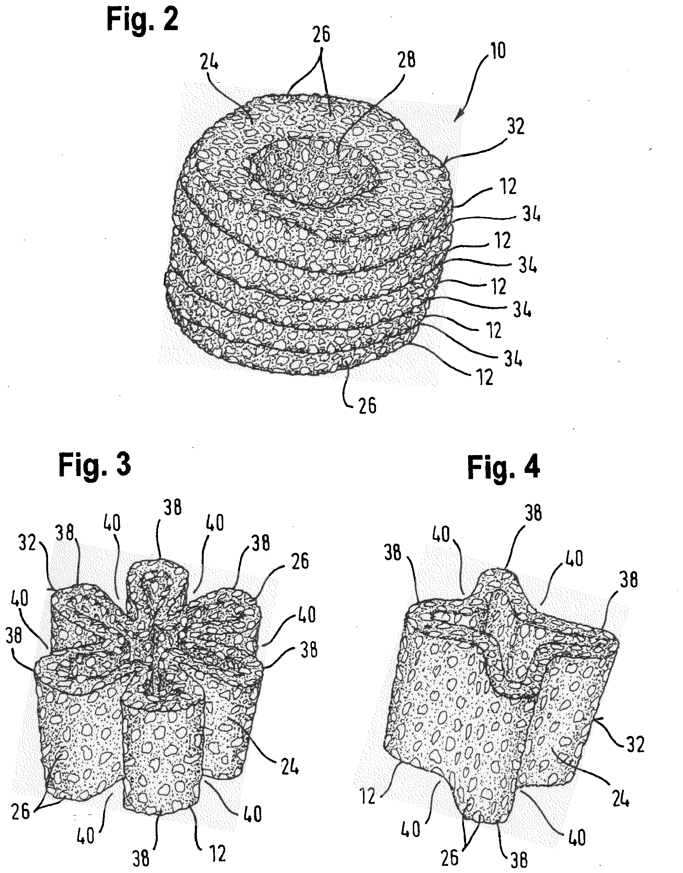

Fig. 1 zeigt schematisch die Verfahrensschritte eines Verfahrens zur Herstellung von Pellets 10, wie sie beispielsweise in Fig. 2 bis 16c gezeigt sind. Zunächst wird in einem ersten Verfahrensschritt S1 eine Lage 12 oder ein Stapel von mehreren übereinandergestapelten Lagen 12 von Metallschaummaterial 14 bereitgestellt, welche bzw. welcher anschließend in einem zweiten Verfahrensschritt S2 zu Metallschaummaterialstücken 18 zerkleinert wird, die dann in einem dritten Verfahrensschritt S3 zu pelletförmigen Metallschaumrohlingen 16 geformt werden. Durch ein anschließendes Sintern in einem vierten Verfahrensschritt S4 werden die Metallschaumrohlinge 16 zu fertigen Pellets 10 weiterverarbeitet. Die so erhaltenen Pellets 10 weisen eine hohe mechanische Stabilität auf und lassen sich, wie nachfolgend beschrieben, zur Herstellung einer Katalysatorfüllung 20 eines Reaktors 22 verwenden. Gemäß einer alternativen Anwendung ist es aber ebenso möglich, einen statischen Mischer, beispielsweise für eine Absorptions- oder Destillationskolonne, aus den Pellets 10 aufzubauen. Es versteht sich, dass je nach Ausbildung der Pellets 10 ein statischer Mischer auch eine Katalysatorfunktion erfüllen bzw. umgekehrt eine Katalysatorfüllung 20 gleichzeitig als statischer Mischer wirken kann.

Um aus dem Metallschaummaterial 14 pelletförmige Metallschaumrohlinge 16 zu bilden, kann auf verschiedene Techniken zurückgegriffen werden, beispielsweise Laserschneiden, Wasserstrahlschneiden, Funkenerodieren, Zerspanen, insbesondere Sägen, Bohren, Drehen, oder Mahlen, kontrolliertes Brechen, Tordieren, Wickeln, Rollen, Pressen, Falten, Wärmebehandeln, insbesondere Schweißen mit einem Lichtbogen, Trennschweißen oder Behandeln mit einer Lötlampe, chemisches Behandeln, insbesondere Auslaugen oder Herauslösen.

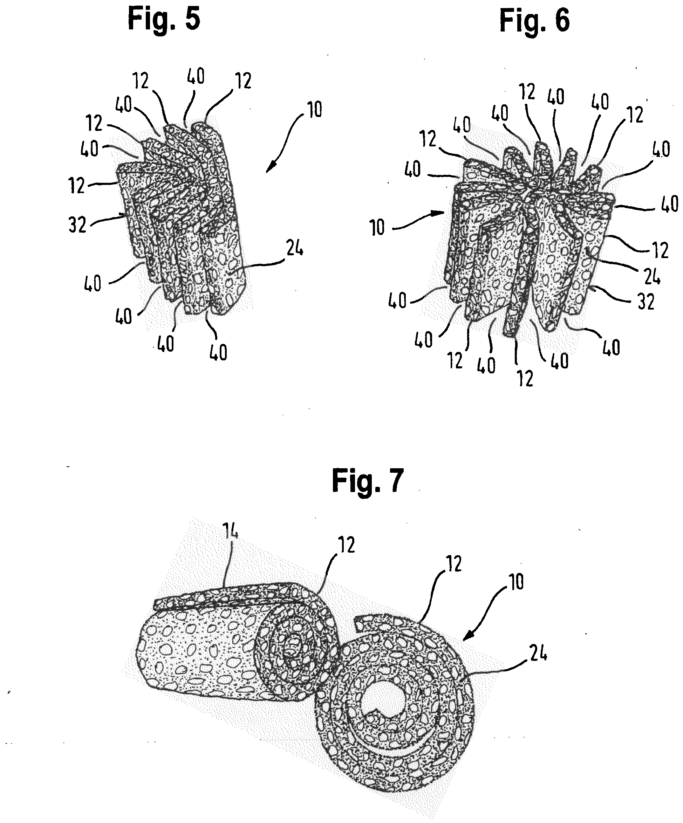

Bei der Herstellung pelletförmiger Metallschaumrohlinge 16 mit einer schneckenförmigen Form, wie beispielsweise in der Mitte von Fig. 7 gezeigt, kann es auch vorteilhaft sein, das Metallschaummaterial 14 zuerst zu verformen und anschließend zu zerkleinern. Je nachdem, welche Form für das Pellet 10 gewünscht ist, kann es allgemein vorteilhaft sein, den zweiten Verfahrensschritt S2 und den dritten Verfahrensschritt S3 in umgekehrter Reihenfolge auszuführen, d.h. das Metallschaummaterial 14 zunächst zu falten, zu rollen, zu tordieren und/oder einzudrücken und anschließend zu zerschneiden, um pelletförmige Metallschaumrohlinge 16 in der gewünschten Größe zu erhalten. Durch das Sintern (Verfahrensschritt S4) werden die pelletförmigen Metallschaumrohlinge 16 dann zu dem Pellet 10 aus Metallschaum 24.

Gemäß einer alternativen Ausführungsform ist es außerdem denkbar, den Verfahrensschritt S4 vor den Verfahrensschritten S2 und S3 durchzuführen. Bei dieser Alternative wird die Lage 12 von Metallschaummaterial 14 also erst gesintert und anschließend wie voranstehend beschrieben zerkleinert und zu fertigen Pellets 10 geformt.

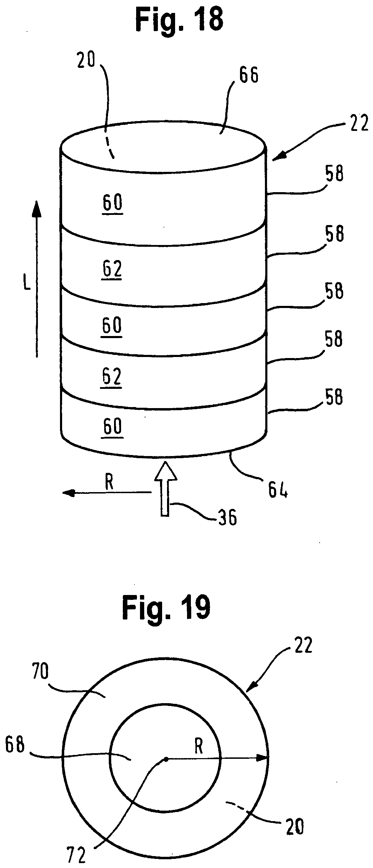

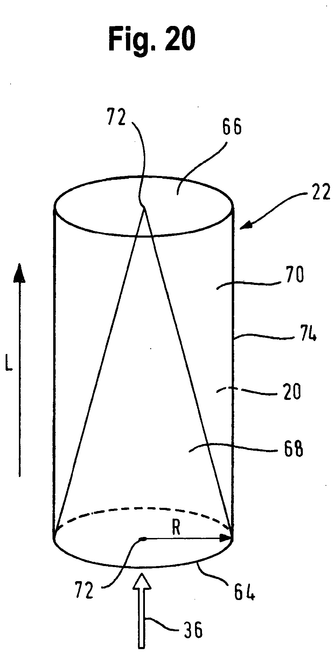

Das in Fig. 2 gezeigte Pellet 10 aus Metallschaum 24 mit offenen Poren 26 hat eine annähernd zylindrische Grundform und weist im zentralen Bereich seiner Stirnseite eine Einbuchtung 28 auf, die aus einem Eindrücken des Metallschaummaterials 14 resultiert. Es ist denkbar, dass auch die in Fig. 2 nicht sichtbare gegenüberliegende Stirnseite des Pellets 10 ebenfalls eine Einbuchtung 28 aufweist. Alternativ kann die Einbuchtung 28 auch als Durchbruch ausgestaltet sein, der sich axial durch das gesamte Pellet 10 erstreckt, wodurch das Pellet 10 die Form eines Raschig-Rings erhält. Das Pellet 10 von Fig. 2 weist mehreren Lagen 12 von Metallschaum 24 auf, welche übereinander gestapelt und miteinander verbunden sind. Die Verbindung der einzelnen Lagen 12 kann beispielsweise durch Verpressen oder durch Verlöten mithilfe einer Lötfolie 30 erfolgen. Eine Außenfläche 32 des Pellets 10 weist mehrere umlaufende Rillen 34 auf. Die Rillen 34 können die Fluiddynamik beeinflussen, indem sie einen den Reaktor 22 durchströmenden Reaktantenstrom 36 (vgl. Fig. 18 und 20) ablenken und darin Turbulenzen erzeugen. Außerdem vergrößern die Rillen 34 die Außenfläche 32 des Pellets 10, sodass der Reaktantenstrom 36 leichter in den offenporiger Metallschaum 24 eindringen kann, wodurch sich die Stofftransporteigenschaften verbessern. Das Pellet 10 von Fig. 2 weist aufgrund seiner kompakten Form eine hohe Dichte auf, was sich vorteilhaft auf die Wärmetransporteigenschaften auswirkt.

Das in Fig. 3 gezeigte Pellet 10 wurde durch mehrfaches Falten einer Lage 12 von Metallschaummaterial 14 hergestellt und weist sechs Ausbuchtungen 38 und sechs Einbuchtungen 40 auf, die zueinander parallel verlaufen und sich axial über die Länge des Pellets 10 erstrecken. Auf ähnliche Weise lässt sich das in Fig. 4 gezeigte Pellet 10 aus Metallschaum 24 mit vier Ausbuchtungen 38 und vier Einbuchtungen 40 herstellen. Im zentralen Bereich weisen die beiden in Fig. 3 und Fig. 4 gezeigten Pellets 10 jeweils einen freien Durchgang auf, der sich axial durch das gesamte Pellet 10 erstreckt. Die in diesen Pellets 10 durch das Falten erzeugten Aus- und Einbuchtungen 38, 40 können Turbulenzen in einem Reaktantenstrom verursachen und somit die Wärmetransporteigenschaften eines entsprechenden Katalysatorbetts im Vergleich zu Pellets 10 ohne Aus- und Einbuchtungen 38, 40 verbessern. Der zentral angeordnete Durchgang bewirkt dabei eine Verminderung des Druckverlusts.

Bei dem in Fig. 5 dargestellten mehrlagigen Pellet 10 sind sieben Einbuchtungen 40 und bei dem in Fig. 6 dargestellten Pellet 10 sind zwölf Einbuchtungen 40 ausgebildet, die durch Aufbiegen einzelner Lagen 12 von Metallschaummaterial 14 erhalten wurden und sich axial erstrecken. Diese Einbuchtungen 40 verursachen Turbulenzen und verbessern somit die Wärmetransporteigenschaften eines entsprechenden Katalysatorbetts im Vergleich zu einem Katalysatorbett mit Pellets 10 ohne diese Einbuchtungen 40.

Alle in Fig. 3 bis 6 gezeigten Pellets 10 weisen eine kompakte Struktur auf, sodass bei einer statistischen Packung eines Katalysatorbetts mit solchen Pellets 10 eine hohe Dichte erzielt werden kann, was wiederum vorteilhaft ist für die Wärme- und Stofftransporteigenschaften und einen hohen Turbulenzgrad bewirken kann.

Es ist auch möglich, eine oder mehrere Lagen 12 des Metallschaummaterials 14 zuerst aufzurollen, wie links in Fig. 7 dargestellt ist, dann zu sintern und anschließend in Scheiben zu schneiden. Hierdurch lässt sich ein schneckenförmiges Pellet 10 erhalten, wie es rechts in Fig. 7 dargestellt ist. Durch das Sintern des aufgerollten Metallschaummaterials 14 wird dabei sichergestellt, dass sich das Metallschaummaterial 14 beim Zerteilen nicht wieder entrollt.

Das schneckenförmige Pellet 10 ist sehr kompakt, was sich vorteilhaft auf die Wärme- und Stofftransporteigenschaften auswirkt. Insbesondere die Stofftransporteigenschaften solcher schneckenförmiger Pellets 10 sind aufgrund der kurzen Transportwege verbessert. Durch das Aufrollen entsteht im inneren Bereich des Pellets 10 ein axialer Durchgang, der den Druckverlust eines entsprechenden Katalysatorbetts verringern kann. Eine statistische Packung eines Katalysatorbetts mit schneckenförmigen Pellets 10 führt zu besonders starken Turbulenzen. Mit den schneckenförmigen Pellets 10 lässt sich neben einer statistischen Packung jedoch auch eine geordnete Packung realisieren. So können zur Verbesserung des Wärme- und Stofftransports in dem Katalysatorbett die schneckenförmigen Pellets 10 gestapelt werden, um gezielt Kanäle in dem Katalysatorbett zu erzeugen, um hierdurch Strömungsprofile in dem Katalysatorbett zu gestalten.

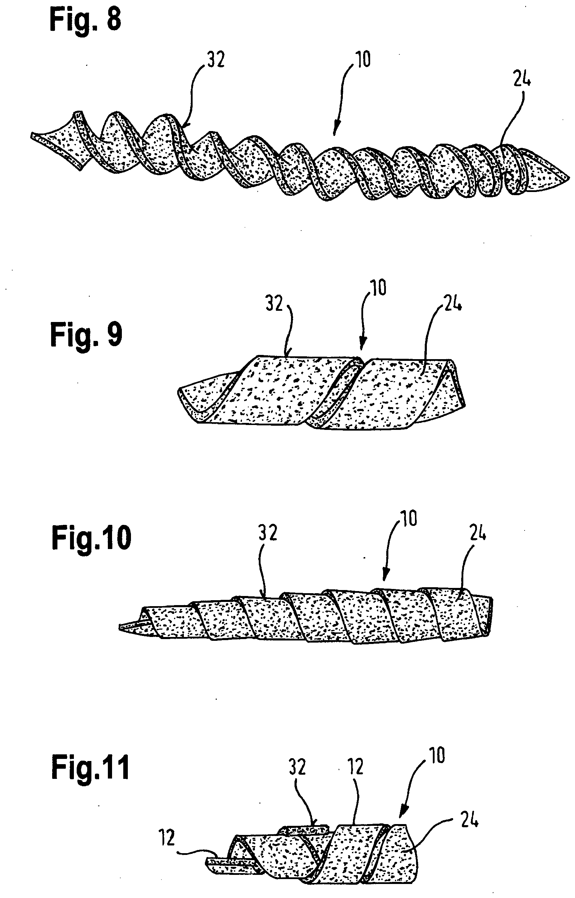

Durch Tordieren oder Wickeln von streifenförmigem Metallschaummaterial 14 lassen sich auch schraubenförmige Pellets 10 herstellen. Das in Fig. 8 gezeigte Pellet 10 ist durch Tordieren zu einer Spiralform gedreht worden. Ein an dem Pellet 10 entlangströmender Reaktantenstrom 36 kann durch die Spiralform des Pellets 10 in Rotation versetzt werden. Eine solche Beeinflussung der Fluiddynamik kann ausgenutzt werden, um die Wärme- und Stofftransporteigenschaft eines Katalysatorbetts zu verbessern. Durch die Spiralform weist das Pellet 10 verhältnismäßig viel freies Volumen auf, was den Druckverlust reduziert. Bei einer vertikalen Anordnung von spiralförmigen Pellets 10 in einem Katalysatorbett, bei welcher die Längsachse der Pellets 10 zu der Strömungsrichtung in dem Katalysatorbett parallel ausgerichtet ist, können gezielt Strömungsprofile erzeugt werden. Mit einer statistischen Packung lassen sich sehr turbulente Strömungen erzielen.

Pellets 10 mit den in Fig. 9 und 10 gezeigten Formen lassen sich durch ein Wickeln eines Streifens von Metallschaummaterial 14 erhalten, wobei durch das Aufwickeln im Inneren dieser Pellets 10 Durchgänge entstehen, die frei von Metallschaum 24 sind und die den Druckverlust in einem entsprechenden Katalysatorbett reduzieren.

Auch können unterschiedliche Lagen 12 von Metallschaum eines Pellets 10 in entgegengesetzte Richtungen tordiert bzw. gewickelt sein, um ein Pellet 10, wie in Fig. 11 gezeigt, zu erzeugen. Aufgrund der unterschiedlichen Torsions- bzw. Wicklungsrichtungen der unterschiedlichen Lagen 12, erfährt ein an dem Pellet 10 vorbeiströmender Reaktantenstrom 36 Ablenkungen in unterschiedliche Richtungen, wodurch sich die Fluiddynamik gezielt beeinflussen lässt, beispielsweise durch die Erzeugung von Turbulenzen. Eine solche Beeinflussung der Fluiddynamik kann ebenfalls genutzt werden, um die Wärme- und Stofftransporteigenschaft eines Katalysatorbetts gezielt zu optimieren.

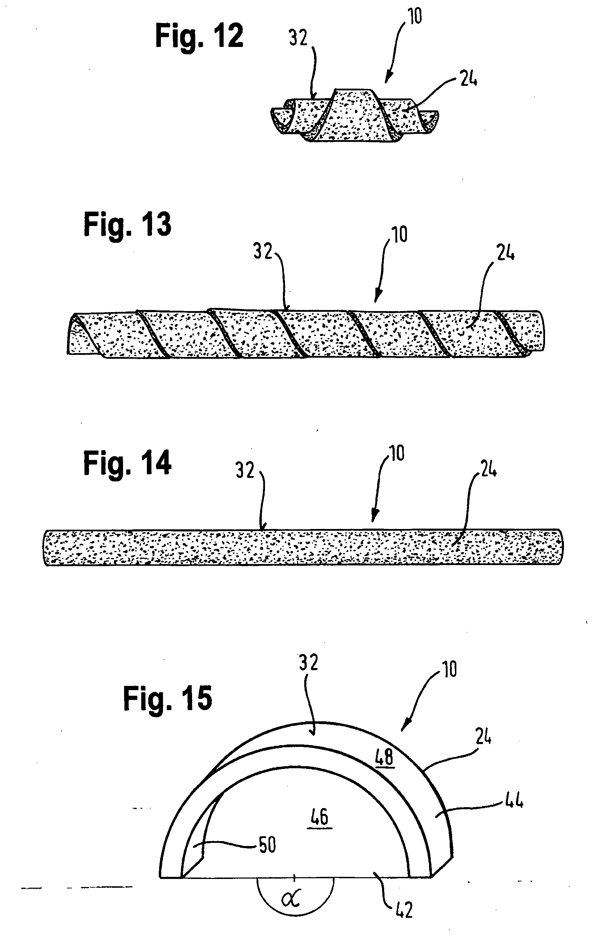

Durch das Wickeln von Metallschaummaterial 14 lassen sich auch Pellets 10 mit den in Fig. 12 und 13 gezeigten Formen erzeugen. Das in Fig. 12 gezeigte Pellet 10 lässt sich durch ein Aufwickeln eines dreieckigen Metallschaummaterials 14 herstellen. Das Aufwickeln eines Streifens aus Metallschaummaterial 14 kann dazu genutzt werden, um einem Pellet 10 die in der Fig. 13 gezeigte nahezu stabförmige Gestalt zu verleihen, wobei durch das Aufwickeln im Inneren des in Fig. 13 gezeigten Pellets ein axialer Durchgang entsteht, der frei von Metallschaum 24 ist und der den Druckverlust in einem entsprechenden Katalysatorbett reduziert.

Die Pellets 10 von Fig. 7 bis 13 weisen an ihren Außenflächen 32 jeweils eine auf Tordieren bzw. Wickeln zurückzuführende Struktur auf, welche dazu geeignet ist, einen daran vorbeiströmenden Reaktantenstrom 36 abzuleiten und zu verwirbeln. Somit können mit derartigen Pellets gezielt Turbulenzen in dem Reaktantenstrom 36 erzeugt werden. Je nach Art der Torsion bzw. Wicklung lassen sich unterschiedliche Außenflächen 32 erzeugen, sodass ein je nach Einsatzzweck maßgeschneidertes Pellet 10 erhältlich ist. Es kann unter Umständen erwünscht sein, weniger Turbulenzen in dem Reaktantenstrom 36 zu erzeugen. Hierfür kann es vorteilhaft sein, beispielsweise das in der Fig. 13 gezeigte nahezu stabförmige Pellet 10 zu verwenden, welches eine relativ glatte Außenfläche 32 aufweist. Eine noch glattere Außenfläche 32 lässt sich erzielen, indem ein stab- oder zylinderförmiges Pellet 10, wie in der Fig. 14 gezeigt, verwendet wird. Die in Fig. 9 bis 14 gezeigten Pellets 10 sind sehr kompakt, was insbesondere für den Wärmetransport vorteilhaft ist.

Durch ein vertikales Packen der in den Fig. 9, 10, 13 und 14 gezeigten Pellets 10 lassen sich sehr dicht gepackte Katalysatorbetten erhalten und gezielt Strömungsprofile in dem Katalysatorbett erzeugen, was besonders für die Wärmetransporteigenschaften vorteilhaft ist. Mittels statistischer Packung dieser Pellets lassen sich turbulente Strömungen erhalten, was für den Wärme- und Stofftransport vorteilhaft ist.

Das in Fig. 15 gezeigte Pellet 10 hat die Form eines offenen Hohlzylinders mit einem Öffnungswinkel α von 180° und einer axialen Öffnung 42 in einer Mantelwand 44. Auch andere Öffnungswinkel im Bereich von 1° bis 359° sind möglich. Ein Öffnungswinkel α von 0° entspricht einem geschlossenen Hohlzylinder. Ein Pellet 10 in Form eines offenen Hohlzylinders lässt sich beispielsweise durch Rollen von Metallschaummaterial 14 erzeugen. Die in der Mantelwand 44 vorgesehene Öffnung 42 lässt den Reaktantenstrom 36 zu der inneren Mantelfläche 46 des hohlzylinderförmgien Pellets 10 eindringen. Somit kann das in der Fig. 15 gezeigte Pellet 10 ähnlich wie eine Röhre den Reaktantenstrom 36 leiten, wodurch ein sehr geringer Druckverlust erzielbar ist. Zur weitergehenden Beeinflussung der Fluiddynamik können an der äußeren Mantelfläche 48 und/oder an der inneren Mantelfläche 46 des offenen Hohlzylinders Einbuchtungen 40 und/oder Rillen 34 vorgesehen sein, welche jedoch in Fig. 15 nicht dargestellt sind. Durch ein geordnetes Packen eines Katalysatorbetts mit den in Fig. 15 gezeigten Pellets 10 ist ebenfalls eine gezielte Erzeugung von Strömungsprofilen in einem Katalysatorbett möglich.

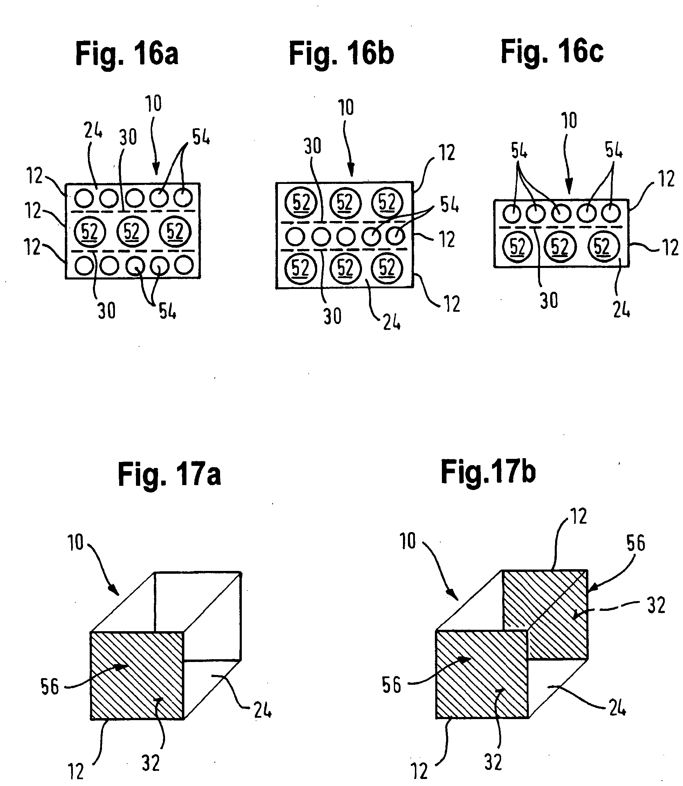

Schematische Querschnitte von Pellets 10 mit drei bzw. zwei unterschiedlichen Lagen 12 sind in Fig. 16a, 16b und 16c gezeigt. Die unterschiedlichen Lagen 12 können durch Verlöten mit einer Lötfolie 30 oder durch Verpressen der Lagen 12 miteinander verbunden sein und unterschiedliche Poren 26 aufweisen. Das Pellet 10 von Fig. 16a weist in der mittleren Lage 12 erste Poren 52 mit größeren Durchmessern und zweite Poren 54 mit kleineren Durchmessern auf. Der Durchmesser der ersten Poren 52 kann im Bereich von 500 µm bis 10000 µm liegen, und der Durchmesser der zweiten Poren 54 kann im Bereich von 10 µm bis 3000 µm liegen. Eine solche Verteilung der Poren 52, 54 kann beispielsweise dazu verwendet werden, um die Verweilzeit von Reaktanten in dem Pellet 10 zu beeinflussen. So können beispielsweise die kleineren Poren 54 im Inneren des in Fig. 16b gezeigten Pellets die Verweilzeit von Reaktanten erhöhen. Bei einem aus zwei unterschiedlichen Lagen 12 aufgebauten Pellet 10 (Fig. 16c) sind in einer Lage 12 größere erste Poren 52 und in der anderen Lage 12 kleinere zweite Poren 54 vorgesehen. Somit tritt der Reaktantenstrom 36 bevorzugt von der Seite mit den ersten Poren 52 in das Pellet 10 ein und aus. Hierdurch lässt sich beispielsweise die Verweilzeit innerhalb des Pellets 10 variieren. Dadurch, dass auf einer Seite des Pellets 10 kleinere Poren 54 vorgesehen sind als auf der anderen Seite des Pellets kann auf der Seite mit den kleineren Poren 54 ein Teil des Reaktantenstroms 36 beim Auftreffen auf das Pellet 10 abgeleitet werden, was wiederum die Fluiddynamik beeinflusst, wodurch sich die Wärme- und Stofftransporteigenschaften einer Katalysatorfüllung beeinflussen lassen.

Das in Fig. 17a gezeigte Pellet 10 weist eine geschlossene Außenfläche 56 auf. Dies bedeutet, dass an der geschlossenen Außenfläche 56 keine Poren 20 in das Innere des Pellets 10 führen, sodass ein gegen die geschlossene Außenfläche 56 strömender Reaktantenstrom 36 nicht in das Pellet 10 eindringen kann und daher von der Außenfläche 32 abprallt. Hierdurch können Turbulenzen entstehen, sodass sich auch durch das teilweise oder vollständige Verschließen einer Außenfläche 32 eines Pellets 10 die Wärme- und Stofftransporteigenschaften beeinflussen lassen. Bei dem in Fig. 17b gezeigten Pellet 10 sind zwei gegenüberliegende geschlossene Außenflächen 56 vorgesehen.

Eine geschlossene Außenfläche 56 kann beispielsweise durch ein Aufbringen einer Lötfolie 30 auf eine Außenfläche 32 eines Pellets 10 und einem anschließenden Erhitzen der Lötfolie 30 erzeugt werden. Es ist auch möglich, in einem Metallschaummaterial 14 mit mehreren Lagen 12, die mittels Lötfolien 30 verbunden sind, innere Grenzflächen in einem Pellet 10 zu erzeugen, welche teilweise oder vollständig geschlossen sein können. Teilweise oder vollständig geschlossene innere Grenzflächen beeinflussen ebenfalls einen in das Pellet eingedrungenen Reaktantenstrom 36. Hierdurch lässt sich beispielsweise die Verweilzeit der Reaktanten innerhalb des Pellets 10 variieren oder Turbulenzen in dem Reaktantenstrom 36 erzeugen.

In Fig. 18 ist ein von einem Reaktantenstrom 36 durchströmter Reaktor 22 in perspektivischer Ansicht dargestellt. Im Inneren des Reaktors 22 ist eine Katalysatorfüllung 20 vorgesehen, welche eine Vielzahl von Pellets 10 umfasst und zwar Pellets 10, die sich hinsichtlich ihrer Größe, Form, Oberfläche, Dichte, Porosität, Orientierung und/oder ihres Materials unterscheiden, wobei die einzelnen Pellets 10 in Fig. 18 bis 20 nicht dargestellt sind. Konkret ist der Reaktor 22 in axialer Richtung L in mehrere Bereiche 58 unterteilt, welche sich hinsichtlich ihrer Katalysatorfüllung 20 unterscheiden. So kann beispielsweise in einem ersten Bereich 60 eine Katalysatorfüllung mit Pellets 10 enthalten sein, die die Wärmezu- oder abfuhreigenschaften des Reaktors 20 optimieren. In einem zweiten Bereich 62 kann die Katalysatorfüllung Pellets 10 umfassen, welche beispielsweise bezüglich der Stofftransporteigenschaften optimiert sind, um den Reaktantenstrom 36 möglichst vollständig umzusetzen. Bei dem in Fig. 18 dargestellten Reaktor sind die ersten und zweiten Bereiche 60, 62 entlang der axialen Richtung L des Reaktors 22 alternierend angeordnet und bilden somit diskrete Schichten mit unterschiedlichen Zusammensetzungen.

Auch ist es denkbar, dass sich die Katalysatorfüllung 20 entlang der axialen Richtung L des Reaktors 22 graduell verändert. Dies bedeutet, dass im Bereich eines Reaktoreingangs 64, in welchem der Reaktantenstrom 36 in den Reaktor 22 eintritt, eine erste Art oder Mischung von Pellets 10 vorgesehen ist und in einem Bereich des Reaktorausgang 66 eine zweite Art oder Mischung von Pellets 10 vorgesehen ist. Die erste Art oder Mischung von Pellets 10 geht entlang der axialen Richtung L des Reaktors in die zweite Art oder Mischung von Pellets 10 über. Hierdurch lässt sich am Reaktoreingang 64 eine andere fluiddynamische Umgebung bereitstellen als am Reaktorausgang 66.

Die Verteilung unterschiedlicher Pellets 10 in der Katalysatorfüllung kann in radialer Richtung R homogen, graduell oder in diskreten Ringen erfolgen. Bei der in Fig. 19 gezeigten Querschnittsansicht eines Reaktors ist erkennbar, dass die Katalysatorfüllung 20 einen radial inneren Bereich 68 und einen radial äußeren Bereich 70 aufweist. In dem radial inneren Bereich 68 kann eine andere Art oder eine andere Mischung von Pellets 10 vorgesehen sein als im radial äußeren Bereich 70. Der Übergang zwischen dem radial inneren Bereich 68 und dem radial äußeren Bereich 70 kann sprunghaft erfolgen, sodass die Katalysatorfüllung diskrete Ringe in radialer Richtung R aufweist. Alternativ kann auch ein gradueller Übergang zwischen dem inneren Bereich 68 und dem äußeren Bereich 70 erfolgen.

In Fig. 20 ist eine teiltransparente Ansicht eines Reaktors dargestellt, dessen Katalysatorfüllung 20 sich in axialer Richtung L graduell und in radialer Richtung R sprunghaft verändert. Am Reaktoreingang 64 erstreckt sich der innere Bereich 68 vom Mittelpunkt 72 des Reaktors 22 bis zur Reaktorwand 74. Entlang der axialen Richtung L in Richtung Reaktorausgang 66 wird der Radius des inneren Bereichs 68 kontinuierlich kleiner, wohingegen die Stärke eines äußeren Bereichs 70 zunimmt, sodass der innere Bereich 68 über die gesamte Länge des Reaktors 22 betrachtet die Form eines Kegels aufweist.

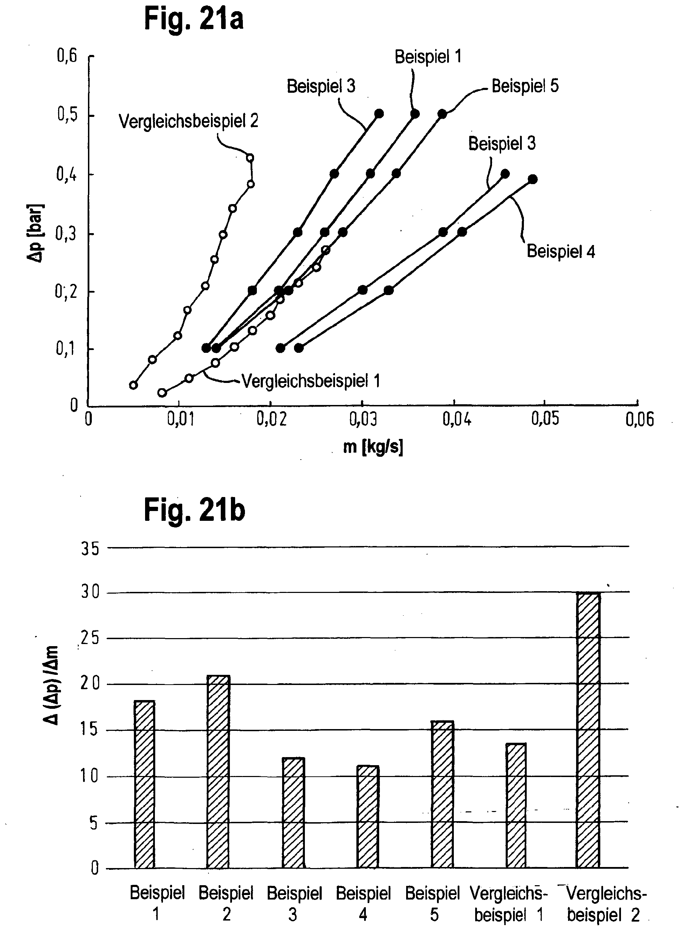

Ein Vergleich von Pellets 10 aus Metallschaum 24 mit konventionellen Keramikpellets ist in den Tabellen 1 und 2 sowie in Fig. 21a und Fig. 21b dargestellt.

In Tabelle 1 sind fünf Beispiele für erfindungsgemäße Pellets 10 mit Würfel- oder Scheibengeometrie, die jeweils aus einer Nickel-Chrom-Aluminium-Legierung (NiCrAl) bestehen, und zwei Vergleichsbeispiele von Keramikpellets, die aus Calciumaluminat bestehen, aufgeführt.

**Tabelle 1**

| | **Form** | **Maße (mm)** | **Porengröße (µm)** | **Material** |
|---|---|---|---|---|
| Beispiel 1 | Würfel | 10 x 10 x 10 | 1200 µm | NiCrAl |
| Beispiel 2 | Würfel | 10 x 10 x 10 | 580 µm | NiCrAl |
| Beispiel 3 | Würfel | 15 x 15 x 15 | 1200 µm | NiCrAl |
| Beispiel 4 ¹ | Würfel | 15 x 15 x 15 | 1200 µm | NiCrAl |
| Beispiel 5 ² | Scheibe | 8 x 8 x 3 | 1200 µm | NiCrAl |
| Vergleichsbeispiel 1 ³ | Hohlzylinder | 13 x 17 | 3500 µm | Calciumaluminat |
| Vergleichsbeispiel 2 ⁴ | Hohlzylinder | 8 x 8 | 3000 µm | Calciumaluminat |

| | | | | |
|---|---|---|---|---|
| ¹ Würfel mit sechs Lagen, Komprimiert um 20% ² Maße beziehen sich auf Länge x Breite x Dicke ³ Zylinder mit Einkerbungen, einem maximalen Außendurchmesser von 13 mm, einer Länge von 17 mm und vier identischen zylindrischen Hohlräumen mit gewölbten Enden und einem Innendurchmesser von jeweils 3,5 mm ⁴ Hohlzylinder mit einem Außendurchmesser von 8 mm, einer Länge von 8 mm und einem Innendurchmesser von 3,0 mm | | | | |

Fig. 21a und 21b zeigen die Druckverlusteigenschaften für Pellets 10 der Beispiele 1 bis 5 sowie der Vergleichsbeispiele 1 und 2. In Fig. 21a ist für jedes Beispiel bzw. Vergleichsbeispiel ein gemessener Druckverlust Δp in bar über einem eingestellten Stoffmengenstrom m in kg/s aufgetragen. Fig. 21a zeigt, dass zwischen dem Druckverlust Δp und dem eingestellten Stoffmengenstrom m ein annähernd linearer Zusammenhang besteht. In Fig. 21b stellt Δm die Differenz zwischen dem für ein Beispiel bzw. Vergleichsbeispiel höchsten und niedrigsten eingestellten Stoffmengenstrom und Δ(Δp) die Differenz zwischen den bei diesen Stoffmengenströmen jeweils gemessenen Druckverlusten dar. Die Werte Δ(Δp)/Δm geben mit anderen Worten die Steigungen von Geraden an, welche durch die Anfangs- und Endpunkte der in Fig. 21a gezeigten Kurven verlaufen, und bilden ein Maß für den Druckverlust pro Stoffmengenstrom für die Beispiele bzw. Vergleichsbeispiele. Je höher der Wert für Δ(Δp)/Δm ist, desto größer wird der Druckverlust mit steigendem Massen- und Stofftransport.

Anhand der Beispiele 1 bis 5 ist zu erkennen, dass sich durch das erfindungsgemäße Verfahren Pellets 10 mit unterschiedlichen Auswirkungen auf den Druckverlust herstellen lassen, d.h. die Pellets 10 können gut an die Anforderungen ihres geplanten Einsatzgebietes angepasst werden. Beispielsweise kann eine Veränderung der Porendurchmesser verwendet werden, um den Druckverlust zu beeinflussen, wie sich anhand der Beispiele 1 und 2 zeigt. Die Verwendung eines Pellets 10 mit mehreren Lagen 12 verringert den Druckverlust und verbessert gleichzeitig die Stofftransporteigenschaften, wie sich anhand der Beispiele 3 und 4 erkennen lässt. Durch eine Veränderung der Form der Pellets 10 kann sowohl der Druckverlust, als auch der Stofftransport je nach Einsatzzweck der Pellets 10 optimiert werden. Das scheibenförmige Pellet 10 gemäß Beispiel 5 weist gleich gute Stofftransporteigenschaften auf wie ein Pellet nach Beispiel 3, jedoch bei erhöhtem Druckverlust.

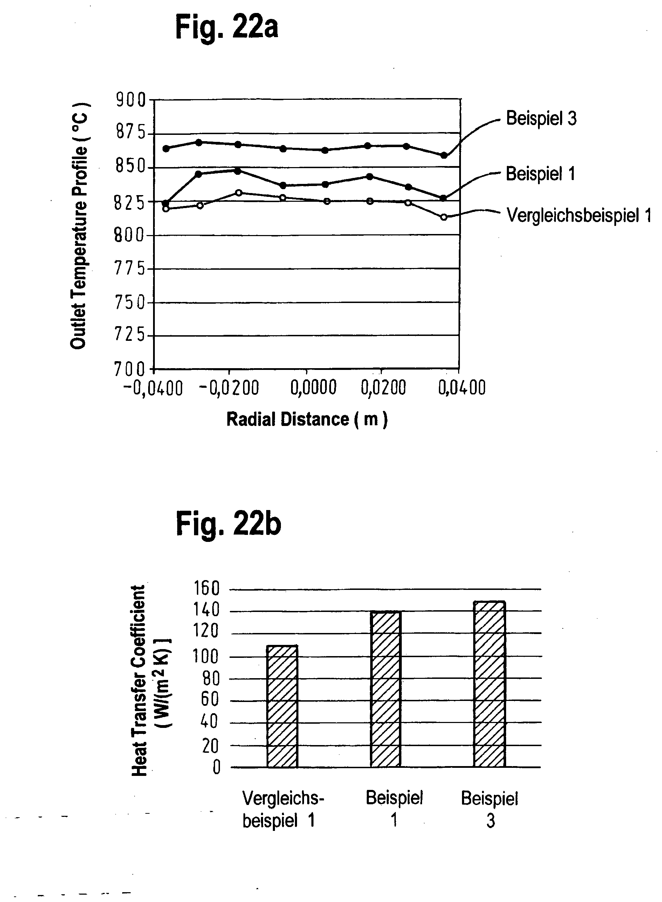

Fig. 22a zeigt drei radiale Auslasstemperaturprofile. Hierzu werden rohrförmige Reaktoren 22 mit Durchmessern von 3 Zoll (7,62 cm) nach ihrem Packen mit unterschiedlichen Pellets 10 mit auf 900°C vorgeheizter Luft als Fluid bei einem Druck von 5 bar und einer Leerrohrgeschwindigkeit von 1 m/s durchströmt, wobei die Reaktoren 22 jeweils in auf 1000°C erwärmten Öfen angeordnet sind. Am Reaktorausgang 66 erfolgt eine Messung der Temperatur an unterschiedlichen radialen Positionen. Durch Auftragen der gemessenen Auslasstemperaturen gegen die zugehörigen radialen Positionen erhält man die in Fig. 22a gezeigten Auslasstemperaturprofile.

Die mit Rauten gekennzeichnete untere Kurve in Fig. 22a erhält man mit Keramikpellets gemäß Vergleichsbeispiel 1 (Tabelle 1). Zwei mit Pellets 10 aus Metallschaum 24 erhaltene Auslasstemperaturprofile sind mit Kreisen (obere Kurve) beziehungsweise mit Dreiecken (mittlere Kurve) gekennzeichnet und basieren jeweils auf würfelförmigen Pellets, die aus einer Nickel-Chrom-Aluminium-Legierung bestehen. Bei dem mit Kreisen gekennzeichneten Auslasstemperaturprofil entsprechen die würfelförmigen Pellets 10 den Pellets von Beispiel 3. Bei dem mit Dreiecken gekennzeichneten Auslasstemperaturprofil entsprechen die würfelförmigen Pellets 10 den Pellets von Beispiel 1. Beide Auslasstemperaturprofile, die auf die Verwendung von Pellets 10 aus Metallschaum 24 zurückzuführen sind, weisen höhere Temperaturen auf, als das auf der Verwendung von Keramikpellets basierende Auslasstemperaturprofil. Dies verdeutlicht, dass die Pellets 10 aus Metallschaum insbesondere bei stark endothermen Reaktionen vorteilhaft sind im Vergleich zu Keramikpellets.

Aus den erhaltenen Auslasstemperaturprofilen lassen sich mittlere Wärmetransportkoeffizienten berechnen, welche in Fig. 22b dargestellt sind. Links in Fig. 22b ist der Wärmetransportkoeffizient des mit Keramikpellets gepackten Reaktors 22 dargestellt, welcher deutlich niedriger ist als die mittleren Wärmetransportkoeffizienten, die auf die Pellets nach Beispiel 1 und 3 zurückzuführen sind. Dies zeigt, dass sich mit den erfindungsgemäßen Pellets 10 aus Metallschaum 24 der Wärmetransport von Reaktoren optimieren lässt.

### Bezuqszeichenliste

- 10: Pellet
- 12: Lage
- 14: Metallschaummaterial
- 16: Metallschaumrohling
- 18: Metallschaummaterialstück
- 20: Katalysatorfüllung
- 22: Reaktor
- 24: Metallschaum
- 26: Poren
- 28: Einbuchtung
- 30: Lötfolie
- 32: Außenfläche
- 34: Rille
- 36: Reaktantenstrom
- 38: Ausbuchtung
- 40: Einbuchtung
- 42: Öffnung
- 44: Mantelwand
- 46: Innenseite
- 48: äußere Mantelfläche
- 50: innere Mantelfläche
- 52: erste Poren
- 54: zweite Poren
- 56: geschlossene Außenfläche
- 58: Bereich
- 60: erster Bereich
- 62: zweiter Bereich
- 64: Reaktoreingang
- 66: Reaktorausgang
- 68: radial innerer Bereich
- 70: radial äußerer Bereich
- 72: Mittelpunkt
- 74: Reaktorwand

- L: axiale Richtung
- R: radiale Richtung
- S1: erster Verfahrensschritt
- S2: zweiter Verfahrensschritt
- S3: dritter Verfahrensschritt
- S4: vierter Verfahrensschritt

## Patentansprüche

1. Verfahren zum Herstellen eines Pellets (10), insbesondere für einen Katalysator und/oder statischen Mischer, umfassend die Verfahrensschritte:
Zuschneiden und/oder Verformen wenigstens einer Lage (12) von Metallschaummaterial (14) in eine Pelletform,
**dadurch gekennzeichnet , dass**
das Pellet (10) ein Volumen von 0,8 mm³ bis 15 cm³ aufweist und die Porosität des Pellets größer gleich 70% ist, wobei die Porosität des Pellets mittels Bildanalyse anhand eines Querschliffs des Pellets dadurch bestimmt wird, dass ein Bild des Querschliffs aufgenommen wird und die Bildflächen mit und ohne Material ins Verhältnis gesetzt werden.

2. Verfahren nach Anspruch 1,
**dadurch gekennzeichnet, dass**
das Metallschaummaterial (14) gesintert wird.

3. Verfahren nach Anspruch 1 oder 2,
**dadurch gekennzeichnet , dass**
das Metallschaummaterial (14) Poren (26) mit Durchmessern aufweist, die monomodal oder multimodal, insbesondere bimodal, verteilt sind.

4. Verfahren nach zumindest einem der vorstehenden Ansprüche,
**dadurch gekennzeichnet, dass**
wenigstens zwei Lagen (12) unterschiedlichen Metallschaummaterials (14) bereitgestellt werden, insbesondere welche durch Verpressen und/oder durch Verlöten mittels einer Lötfolie (30) miteinander verbunden sind.

5. Verfahren nach zumindest einem der vorstehenden Ansprüche,
**dadurch gekennzeichnet, dass**
das Metallschaummaterial (14) Poren (26) enthält, die einen Durchmesser von 10 µm bis 10000 µm aufweisen.

6. Pellet (10), erhältlich nach einem Verfahren nach zumindest einem der Ansprüche 1 bis 5,
umfassend wenigstens eine Lage (12) von Metallschaum (24).

7. Pellet (10) nach Anspruch 6,
**gekennzeichnet durch**
wenigstens eine außenseitige Einbuchtung (28) und/oder Rille (34) und/oder wenigstens eine Wicklung und/oder Torsion einer Lage (12) von Metallschaum (24).

8. Pellet (10) nach Anspruch 6 oder 7,
**dadurch gekennzeichnet, dass**
wenigstens eine Außenfläche (32) und/oder innere Grenzfläche des Pellets (10) zumindest teilweise geschlossen ist.

9. Pellet (10) nach zumindest einem der Ansprüche 6 bis 8,
**dadurch gekennzeichnet , dass**
das Pellet (10) wenigstens zwei Lagen (12) unterschiedlichen Metallschaums (24) umfasst.

10. Pellet (10) nach zumindest einem der Ansprüche 6 bis 9,
**dadurch gekennzeichnet, dass**
das Pellet (10) zumindest im Wesentlichen aus Metallschaum (24) besteht.

11. Pellet (10) nach zumindest einem der Ansprüche 6 bis 10,
**dadurch gekennzeichnet, dass**
der Metallschaum (24) Poren (26) mit Durchmessern aufweist, die monomodal oder multimodal, insbesondere bimodal, verteilt sind.

12. Pellet (10) nach zumindest einem der Ansprüche 6 bis 11,
**dadurch gekennzeichnet , dass**
der Metallschaum (24) Poren (26) mit einem Durchmesser von 10 µm bis 10000 µm aufweist.

13. Katalysatorfüllung (20) umfassend eine Vielzahl von Pellets (10) nach zumindest einem der Ansprüche 6 bis 12.

14. Statischer Mischer, beispielsweise für eine Absorptions- oder Destillationskolonne, mit einer Vielzahl von Pellets (10) nach zumindest einem der Ansprüche 6 bis 12.

## Claims

1. A method of producing a pellet (10), in particular for a catalyst and/or for a static mixer, comprising the method steps:
cutting to shape and/or shaping at least one layer (12) of metal foam material (14) into a pellet shape,
**characterized in that**
the pellet (10) has a volume of 0.8 mm³ to 15 cm³ and the porosity of the pellet is greater than or equal to 70%, with the porosity of the pellet being determined by means of an image analysis with reference to a transverse cross-section of the pellet **in that** an image of the cross-section is taken and the image surfaces with and without material are put into relationship with one another.

2. A method in accordance with claim 1,
**characterized in that**
the metal foam material (14) is sintered.

3. A method in accordance with claim 1 or claim 2,
**characterized in that**
the metal foam material (14) has pores (26) having diameters which are distributed in a monomodal or multimodal manner, in particular in a bimodal manner.

4. A method in accordance with at least one of the preceding claims,
**characterized in that**
at least two layers (12) of different metal foam material (14) are provided which are in particular connected to one another by pressing and/or by soldering by means of a soldering film (30).

5. A method in accordance with at least one of the preceding claims,
**characterized in that**
the metal foam material (14) includes pores (26) which have a diameter of 10 µm to 10,000 µm.

6. A pellet (10) obtainable in accordance with a method in accordance with at least one of the claims 1 to 5,
comprising at least one layer (12) of metal foam (24).

7. A pellet (10) in accordance with claim 6,
**characterized by**
at least one outer-side indentation (28) and/or groove (34) and/or at least one winding and/or twist of a layer (12) of metal foam (24).

8. A pellet (10) in accordance with claim 6 or claim 7,
**characterized in that**
at least one outer surface (32) and/or one inner boundary surface of the pellet (10) is at least partly closed.

9. A pellet (10) in accordance with at least one of the claims 6 to 8,
**characterized in that**
the pellet (10) comprises at least two layers (12) of different metal foam (24).

10. A pellet (10) in accordance with at least one of the claims 6 to 9,
**characterized in that**
the pellet (10) at least substantially comprises metal foam (24).

11. A pellet (10) in accordance with at least one of the claims 6 to 10,
**characterized in that**
the metal foam (24) has pores (26) having diameters which are distributed in a monomodal or multimodal manner, in particular in a bimodal manner.

12. A pellet (10) in accordance with at least one of the claims 6 to 11,
**characterized in that**
the metal foam (24) has pores (26) having a diameter of 10 µm to 10,000 µm.

13. A catalyst charge (20) comprising a plurality of pellets (10) in accordance with at least one of the claims 6 to 12.

14. A static mixer, for example for an absorption column or distillation column, comprising a plurality of pellets (10) in accordance with at least one of the claims 6 to 12.

## Revendications

1. Procédé de fabrication d'une pastille (10), destinée en particulier à un catalyseur et/ou à un mélangeur statique, comprenant les étapes:
découper et/ou déformer au moins une couche (12) de matériau en mousse métallique (14) en une forme de pastille,
**caractérisé en ce que**
la pastille (10) présente un volume de 0,8 mm³ à 15 cm³, et la porosité de la pastille est supérieure ou égale à 70%, la porosité de la pastille étant déterminée par analyse d'image à partir d'une coupe métallographique de la pastille en prenant une image de la coupe métallographique et en mettant en relation les surfaces de l'image avec et sans matériau.

2. Procédé la revendication 1,
**caractérisé en ce que**
le matériau en mousse métallique (14) est fritté.

3. Procédé selon la revendication 1 ou 2,
**caractérisé en ce que**
le matériau en mousse métallique (14) contient des pores (26) dont les diamètres sont répartis de manière monomodale ou multimodale, en particulier bimodale.

4. Procédé selon l'une au moins des revendications précédentes,
**caractérisé en ce que**
l'on fournit au moins deux couches (12) de matériaux en mousse métallique différents (14), qui sont en particulier reliées entre elles par pressage et/ou par brasage au moyen d'une feuille de brasage (30).

5. Procédé selon l'une au moins des revendications précédentes,
**caractérisé en ce que**
le matériau en mousse métallique (14) contient des pores (26) présentant un diamètre de 10 µm à 10 000 µm.

6. Pastille (10), susceptible d'être obtenue par un procédé selon l'une au moins des revendications 1 à 5,
comprenant au moins une couche (12) de mousse métallique (24).

7. Pastille (10) selon la revendication 6,
**caractérisée par**
au moins une échancrure (28) et/ou rainure (34) extérieure et/ou au moins un enroulement et/ou une torsion d'une couche (12) de mousse métallique (24).

8. Pastille (10) selon la revendication 6 ou 7,
**caractérisée en ce que**
au moins une surface extérieure (32) et/ou une interface intérieure de la pastille (10) est au moins partiellement fermée.

9. Pastille (10) selon l'une au moins des revendications 6 à 8,
**caractérisée en ce que**
la pastille (10) comprend au moins deux couches (12) de mousses métalliques différentes (24).

10. Pastille (10) selon l'une au moins des revendications 6 à 9,
**caractérisée en ce que**
la pastille (10) est constituée au moins sensiblement en mousse métallique (24).

11. Pastille (10) selon l'une au moins des revendications 6 à 10,
**caractérisée en ce que**
la mousse métallique (24) présente des pores (26) dont les diamètres sont répartis de manière monomodale ou multimodale, en particulier bimodale.

12. Pastille (10) selon l'une au moins des revendications 6 à 11,
**caractérisée en ce que**
la mousse métallique (24) présente des pores (26) d'un diamètre de 10 µm à 10 000 µm.

13. Garniture de catalyseur (20) comprenant une multitude de pastilles (10) selon l'une au moins des revendications 6 à 12.

14. Mélangeur statique, par exemple pour une colonne d'absorption ou de distillation, comprenant une multitude de pastilles (10) selon l'une au moins des revendications 6 à 12.
